# FASCICULE DE BREVET EUROPEEN

(11) **EP 0 859 328 B1**
(45) Date de publication et mention de la délivrance du brevet: **22.03.2000**
(21) Numéro de dépôt: 98400299.8
(22) Date de dépôt: 10.02.1998
(51) Int. Cl.: G06F 15/16, G06F 9/46

(54) **Registre sémaphore rapide à fonctionnement sécurisé sans protocole de bus spécifique**
Schnelles Semaphoreregister mit einer sicheren Arbeitsweise ohne spezifisches Busprotokoll
Fast semaphore register with a secured functioning without a specific bus protocol

(30) Priorité: 12.02.1997 FR 9701598
(43) Date de publication de la demande: 19.08.1998
(73) Titulaire: THOMSON-CSF, 75008 Paris (FR)
(72) Inventeur: Tissot, Serge, 94117 Arcueil Cedex (FR)
(74) Mandataire: Chaverneff, Vladimir

(56) Documents cités:
- EP-A- 0 261 497
- EP-A- 0 463 901
- EP-A- 0 464 708
- EP-A- 0 543 560

## Description

La présente invention se rapporte à un registre sémaphore rapide à fonctionnement sécurisé sans protocole de bus spécifique.

Dans les systèmes multi-processeurs, il arrive fréquemment que plusieurs processeurs réclament simultanément l'accès à une ressource commune (écran, imprimante, ...). Dans certains cas, les ressources peuvent être accessibles simultanément par plusieurs processeurs, par exemple certaines mémoires. Dans d'autres cas, les ressources ne peuvent être utilisées que par un seul processeur à la fois. Elles sont alors qualifiées de ressources non partageables. On peut avoir recours à un "sémaphore" qui est une case mémoire destinée à être utilisée par un logiciel pour qu'une tâche s'exerçant sur un ou plusieurs processeurs puisse s'assurer, pendant un certain temps, l'accès exclusif à une ressource non partageable du système. Cette fonction de sémaphore nécessite classiquement l'utilisation de mesures particulières: à l'intérieur des processeurs, définition et utilisation d'instructions de lecture et d'écriture indivisibles ou atomiques particulières (par exemple: "test and set", "compare and swap", "load and reserve"). Sur les bus des processeurs et les sous-bus associés (dans les mémoires, les circuits d'entrée/sortie, les bus d'intercommunication), il faut utiliser des signaux particuliers (par exemple : "Lock" ou "RMW", c'est-à-dire "Read, Modify, Write") ou des protocoles particuliers de bus destinés à prolonger le caractère indivisible des cycles à l'extérieur des processeurs; ces protocoles de bus spécifiques et ces signalisations particulières ont très souvent pour inconvénient d'introduire de la complexité et des pertes de temps dans les systèmes de gestion de bus, par exemple l'arbitrage du bus.

On connaît par exemple d'après le brevet US 5 276 886 un dispositif de sémaphore pour système multi-processeurs, fonctionnant en lecture sans protocole de bus particulier ni instruction processeur spécifique, qui ne peut pas fournir le numéro de la tâche qui a pu le basculer à l'état "occupé", du fait d'une commande interne de basculement de l'état du sémaphore et d'une impossibilité de prise en compte d'action liée à la lecture du sémaphore.

On connaît d'après le brevet US 5 317 749 un procédé de contrôle d'accès à une ressource partagée. Ce procédé est purement logiciel et nécessite un protocole de bus spécifique.

La présente invention a pour objet un dispositif de sémaphore pour système multiprocesseurs devant accéder au moins à une ressource non partageable, dispositif qui ne nécessite aucun protocole matériel particulier pour les échanges avec le bus auquel il est relié, qui permette d'établir sans aucune ambiguïté un lien entre le basculement à l'état "occupé" d'un sémaphore et la tâche qui l'a provoqué, et ce, le plus rapidement possible.

Le dispositif conforme à l'invention comporte un registre comportant au moins un champ de contrôle et un champ de données, et des moyens de contrôle d'écriture dans ledit registre d'informations de données envoyées sur un premier bus auquel sont reliés les différents processeurs du système, lesdits moyens étant reliés à au moins un fil de bit de contrôle dudit bus et à la sortie du champ de contrôle du registre, la sortie de données du registre étant par ailleurs reliée à au moins un bus de relecture du registre par le (s) processeur (s) et, le cas échéant, à une ressource matérielle non partageable.

La présente invention sera mieux comprise à la lecture de la description détaillée de deux modes de réalisation, pris à titre d'exemples non limitatifs et illustrés par le dessin annexé, sur lequel :
- la figure 1 est le bloc-diagramme d'un mode de réalisation préféré du dispositif de l'invention, et
- la figure 2 est le bloc-diagramme d'une variante du dispositif de la figure 1.

L'invention est décrite ci-dessous en référence à un système multiprocesseur relié à une ressource non partageable (imprimante, écran d'affichage, ressource logicielle,...), mais il est bien évident qu'elle n'est pas limitée à une telle application, et qu'elle peut être mise en oeuvre dans d'autres systèmes dans lesquels des traitements doivent être effectués de façon exclusive, à un instant donné, entre les différents demandeurs de ces traitements.

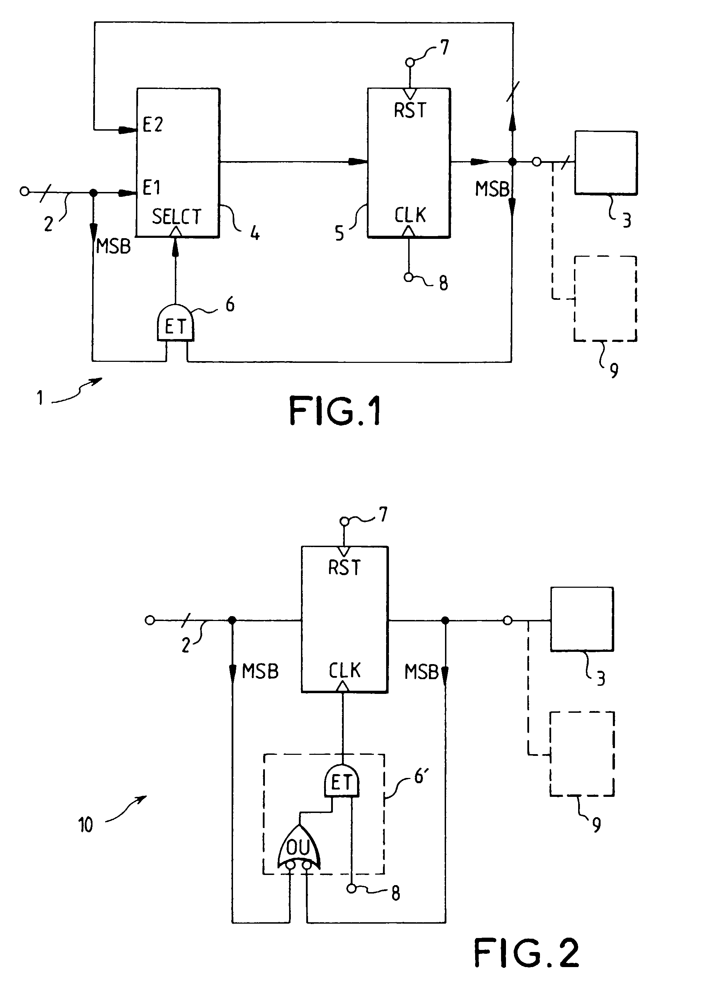

Le dispositif de sémaphore 1 représenté en figure 1 est relié, côté entrée, à un bus 2, et côté sortie au moins vers un ou plusieurs bus de relecture du registre par les processeurs, et éventuellement vers une ressource matérielle non partageable 9. Les différents processeurs (non représentés) du système dans lequel est implanté le dispositif 1 sont reliés aux bus 2 et 3 (qui peuvent être les mêmes s'il s'agit d'un bus bidirectionnel). Les bus 2 et 3 sont par exemple, et de façon non limitative, des bus à huit fils.

L'un de ces fils, par exemple celui affecté au bit de poids le plus élevé (MSB), est celui sur lequel circule le signal de contrôle décrit ci-dessous, les sept autres fils de ce bus véhiculent le champ donné.

Le bus 2 est relié à une première entrée E1 d'un multiplexeur 4 à deux entrées. La sortie du multiplexeur 4 (également sur huit bits pour l'exemple précité) est reliée à l'entrée d'un registre 5 ("latch" en anglais). Au repos ou lorsque la ressource 9 est libre, le multiplexeur 4 relie son entrée E1 à sa sortie. La sortie du registre 5 (également sur huit bits pour l'exemple précité) est reliée à la deuxième entrée E2 du multiplexeur 4. Les huit fils de données de la sortie du registre 5 sont reliés vers le bus 3 de relecture du registre par les processeurs, et éventuellement vers une ressource matérielle non partageable 9. Le fil de signal de contrôle (MSB) de la sortie du registre 5 est relié à une première entrée d'une porte "ET" 6, dont la deuxième entrée est reliée au fil de signal de contrôle du bus 2. La sortie de la porte 6 est reliée à l'entrée de commande (SELCT) du multiplexeur 4. L'entrée de remise à zéro (RST) du registre 5 est reliée à une borne 7 recevant un signal de remise à zéro du registre, par exemple lors du démarrage du système. L'entrée de signaux d'horloge (CLK) du registre 5 est reliée à une borne 8 recevant du bus 2 les signaux d'horloge d'écriture du registre.

Le dispositif 1 décrit ci-dessus fonctionne de la façon suivante. A sa mise en route, un signal de remise à zéro est envoyé sur la borne 7, ce qui force à zéro tous les bits du registre 5, et en particulier le MSB, qui est le bit de contrôle du sémaphore, et dont la signification est « ressource 9 associée de façon matérielle ou logicielle au sémaphore, libre » lorsqu'il est à zéro.

A un instant t, une tâche quelconque T1, exécutée par l'un au moins des processeurs du système, veut s'approprier la ressource 9 pour y effectuer ou faire effectuer des traitements. Cette tâche T1 émet sur le fil MSB du bus 2 un niveau 1 (signifiant "écriture conditionnelle"), tout en envoyant ses données sur les sept autres fils du bus 2. L'entrée E1 étant commutée sur la sortie du multiplexeur 4, les informations (données + bit de contrôle à 1) de T1 arrivent au registre 5. Au premier coup d'horloge appliqué sur la borne 8, le registre 5 transfère vers sa sortie ces informations, qui se retrouvent également à l'entrée E2 du multiplexeur 4. Les données sont aussitôt disponibles sur le bus de relecture 3 et éventuellement sur la ressource matérielle non partageable 9, tandis que le bit de contrôle MSB (à 1) se retrouve à l'entrée correspondante de la porte 6. Par conséquent, si une écriture conditionnelle venant du bus 2 (MSB bus 2 à « 1 ») se présente, un "1" apparaît à la sortie de la porte 6 et fait basculer le multiplexeur 4 vers son entrée E2, interdisant cette écriture dans le registre 5 tant que le bit de contrôle du bus 2 est à "1".

La tâche T1 lit aussitôt après, ou bien plus tard, le contenu du registre sémaphore 5 (en lisant le registre 5 sur le bus 3), compare la valeur ainsi lue avec la valeur écrite (telle qu'envoyée sur le bus 2), constate qu'elles sont identiques, et en déduit que la ressource non partageable 9, associée de façon matérielle ou logicielle au sémaphore, lui est effectivement attribuée.

Si une tâche T2, différente de T1, avait essayé d'écrire ses informations dans le registre 5 juste après T1 (ou tant que T1 n'a pas libéré la ressource 9), de la même façon que T1, elle n'aurait pas pu le faire, car alors la comparaison entre ses propres informations (envoyées sur le bus 2) et le contenu du registre 5 (lu via le bus 3) aurait aussitôt prouvé une différence, puisque le contenu du registre 5 est celui envoyé précédemment par T1 (l'entrée active du multiplexeur 4 est E2). Par conséquent, T2 doit attendre que T1 envoie un bit de contrôle égal à zéro sur le bus 2 pour faire basculer le multiplexeur 4 sur E1, et permettre ainsi à T2 d'inscrire son contenu dans le registre 5. Le passage à zéro du bit de contrôle de T1 signifie "écriture inconditionnelle", et le sémaphore signale "ressource libre".

Les données, autres que le bit de contrôle, envoyées par les tâches sur le bus 2, peuvent être quelconques. Elles peuvent, par exemple, être utilisées pour coder le numéro de tâche et/ou de processeur, indiquant ainsi aux autres tâches qui a utilisé la ressource 9 en dernier.

Il est important de noter que l'inscription des informations (données + bit de contrôle) dans le registre 5 s'effectue en un seul coup de signal d'horloge, ce qui permet d'associer immédiatement l'information "ressource occupée" à l'identité de la tâche et/ou processeur qui occupe la ressource et aux informations éventuellement transmises par cette tâche.

Le dispositif 10 représenté en figure 2 comporte le même registre 5 que le dispositif 1 de la figure 1, mais ne comporte plus le multiplexeur 4. Dans ce dispositif 10, le fil de MSB du bus 2 et la sortie MSB du registre 5 sont aussi reliés aux entrées d'un circuit de la porte 6 qui forme une condition de propagation de l'impulsion positive d'horloge 8 de tentative d'écriture dans le registre 5.

Le fonctionnement du dispositif 10 est semblable à celui du dispositif 1, car le registre 5 ne transmet son contenu à sa sortie, donc à la ressource 9 que si la ressource 9 est libre (MSB registre 5 à « 0 ») ou si l'écriture est inconditionnelle (MSB bus 2 à « 0 »).

Il est aisé d'imaginer que les implémentations décrites aux figures 1 et 2 peuvent être généralisées de la façon suivante : la condition d'écriture du sémaphore sortant de la porte 6 peut être une combinaison booléenne entre tout ou partie des bits du bus 2 et tout ou partie des bits de sortie du registre 5. Ainsi par exemple, l'état libre du sémaphore peut-être codé conventionnellement par l'état 0 de tous les bits de sortie du registre 5. Une écriture venant du bus 2 sera considérée comme inconditionnelle si tous les bits du bus 2 sont à « 0 » (libération de la ressource); une écriture venant du bus (2) sera considérée comme conditionnelle si au moins l'un des bits venant du bus (2) est à « 1 », la donnée représentant alors au moins pour partie l'identificateur unique et différent de 0 de la tâche essayant de s'approprier le sémaphore.

Dans le cas le plus général, le système dans lequel est implanté le dispositif de l'invention peut être composé de sous-systèmes (cartes CPU par exemple), mis en grappes, chaque sous-système ou carte pouvant comporter un ou plusieurs processeurs.

Dans le cas d'un système matériel associé à un « operating système » (O.S.) de type « multiprocesseurs symétriques » (plusieurs processeurs associés à une mémoire commune et fonctionnant avec un O.S. commun), on sait qu'une tâche peut s'exécuter indifféremment sur plusieurs processeurs. Le numéro de processeur n'est alors pas utilisé, puisque la même tâche peut commencer sur un processeur et se terminer sur un autre.

Dans un système à processeurs en parallèle, de type « grappe », où chaque O.S. est dupliqué, le numéro de processeur est utilisé pour s'affranchir de numéros identiques éventuellement attribués à deux tâches différentes.

Dans le dispositif de l'invention, le champ de données doit comprendre un identificateur unique de tâche ou de processeur à l'intérieur du système. Cet identificateur doit être au minimum unique parmi l'ensemble des tâches et processeurs pouvant accéder à la même ressource non partageable.

Le dispositif de l'invention présente une grande sûreté de fonctionnement. En effet, quand un incident matériel ou logiciel survient sur l'un des processeurs ou tâches (à identificateur unique) ayant obtenu la possibilité d'utiliser la ressource non partageable, et avant qu'il n'ait eu le temps de libérer la ressource, le système non muni du dispositif de l'invention peut rester paralysé, aucune autre tâche ne pouvant alors utiliser la ressource. Par contre, le sémaphore de l'invention permet de connaître à tout moment de l'utilisation de la ressource, la tâche et le processeur occupant cette ressource. Si, par exemple, la tâche est « tuée » par l'O.S., il est facile pour ce dernier de libérer le (les) sémaphore (s) correspondant (s). De même, si l'un des processeurs ou l'une des cartes du système doit être réinitialisé (e), il est facile de vérifier si une ressource protégée par le sémaphore de l'invention est restée bloquée, puis de libérer cette ressource.

Si, comme enseigné par l'art antérieur, une case mémoire était utilisée pour enregistrer le numéro de tâche et/ou de processeur, juste après la prise du sémaphore, il resterait impossible de connaître la tâche et le processeur bloquant la ressource si l'anomalie de fonctionnement survient entre la prise du sémaphore et l'enregistrement du numéro de tâche et/ou processeur. On notera qu'un délai, pouvant même être assez long pourrait s'écouler entre la prise du sémaphore et l'écriture du numéro de tâche et/ou processeur si une perturbation survient entre ces deux événements (interruption, arbitrage de bus, pagination de l'O.S....).

Le champ de données du sémaphore, outre les données concernant le numéro de tâche et/ou processeur, peut comprendre un champ d'information ou de commande liée à l'utilisation de la ressource. Dans le cas le plus fréquent où la ressource est libre, dès le premier accès d'écriture, ce champ d'information et/ou de commande (par exemple: commande de démarrage d'entrée/sortie) est disponible pour son exploitation par le système et/ou son logiciel.

Cela permet un gain dans le délai d'exécution de la requête et dans le temps d'indisponibilité de la ressource pour les autres tâches par rapport à une méthode plus classique de lecture/modification/écriture (test and set, par exemple). Ce temps pourrait éventuellement être long si un événement perturbant (interruption, arbitrages de bus, pagination operating system...) survenait dans la tâche demandant l'accès à la ressource entre la prise du sémaphore classique et la fourniture d'une commande/information.

Dans le cas de l'exécution en mode « user » une tâche de niveau utilisateur peut facilement utiliser le sémaphore objet de l'invention pour les raisons suivantes :
- aucune instruction privilégiée n'est requise
- une exception (interruption, pagination operating system...) peut survenir à n'importe quel instant sans remettre en cause l'intégrité de la protection d'accès à la ressource non partagée.

Le dispositif de l'invention est très simple à implémenter en matériel et utilisable sur des bus sans protocole particulier. En effet, une simple porte logique pour traduire la condition d'écriture et un dispositif pour effectuer cette écriture conditionnellement (multiplexeur par exemple) suffisent. Ce dispositif est utilisable sur tout type de bus, dans des environnements hétérogènes, le(s) bus doi(ven)t simplement posséder des bits de données et la possibilité d'effectuer des cycles standard de lecture/écriture et être utilisés simultanément pour accéder au registre sémaphore, y compris à travers un réseau informatique.

Le problème qui se pose classiquement avec les sémaphores est la priorité d'accès à la ressource non partageable en cas de demandes rapprochées de plusieurs tâches :
(a) d'une part, il est souvent souhaitable de s'assurer que toutes les tâches arriveront de façon environ équitable (par priorité tournante) ou bien selon une priorité fixe à prendre la ressource.
(b) d'autre part, les tâches qui attendent qu'une ressource soit libérée ne doivent pas engendrer un trafic bus inutile trop important en vérifiant très souvent si la ressource n'est pas libre.

Pour parvenir à ce résultat, il est possible de définir à l'intérieur du champ données du sémaphore un champ quantifiant le délai prévisionnel restant à courir pour l'occupation de la ressource. Au fur et à mesure que le temps d'occupation s'écoule, ce champ peut être mis à jour (décrémenté par exemple) par une forme supplémentaire d'écriture (par la tâche qui est chargée de libérer la ressource, pas forcément celle qui l'a prise) inconditionnelle du registre laissant l'état du sémaphore à « occupé » (implémentation par un bit supplémentaire du champ contrôle ou accès du même registre à une adresse différente). C'est la tâche en charge de libérer le sémaphore (la tâche qui a pris le sémaphore ou bien une tâche productrice, selon le cas) qui met à jour ce champ.

Toute tâche voyant le sémaphore occupé par relecture et comparaison du numéro de tâche/processeur sait ainsi dès le tout début de l'occupation du sémaphore et sans risque d'erreur, au bout de combien de temps environ elle doit réessayer de s'approprier le sémaphore, évitant ainsi de tenter des accès inutiles sur le bus; le critère (b) est ainsi rempli. Pour remplir le critère (a), il suffit à la tâche d'attendre un délai supplémentaire déterminé en fonction de sa priorité: plus la priorité sera faible, plus le délai supplémentaire sera grand. Si des accès à la ressource de priorités équitables sont souhaités, il est préférable pour la tâche voyant la ressource occupée d'introduire un petit délai aléatoire en plus du délai prévisionnel et du délai déterminé par sa priorité.

La disponibilité du délai prévisionnel d'accès à la ressource est effective dès la prise du sémaphore et simultanément à celle-ci.

Une implémentation particulière du registre sémaphore décrit ci-dessus permet de limiter la phase de prise du sémaphore à un seul cycle de lecture sur le bus, à la place des deux cycles d'écriture/vérification : les bits de poids faible d'adresse du cycle de lecture peuvent être utilisés pour véhiculer la valeur à écrire dans le registre sémaphore (écriture conditionnelle ou inconditionnelle), lequel est sélectionné quelle que soit la valeur de ces bits d'adresse de poids faible. Ainsi, physiquement, un seul cycle de lecture sur le bus permet de prendre le contrôle du sémaphore, avec tous les avantages de sécurité, rapidité et simplicité de mise en oeuvre précédemment décrits.

## Revendications

1. Dispositif de registre sémaphore pour systèmes multiprocesseurs, caractérisé en ce qu'il comporte un registre (5) comportant au moins un champ de contrôle (MSB) et un champ de données, et des moyens (4, 6 ; 6') de contrôle d'écriture dans ledit registre (5) d'informations de données envoyées sur un premier bus (2) auquel sont reliés les différents processeurs du système, lesdits moyens étant reliés à au moins un fil (MSB) de bit de contrôle dudit bus (2) et à la sortie du champ de contrôle (MSB) du registre, la sortie de données du registre étant par ailleurs reliée à au moins un bus de relecture (3) du registre par le (s) processeur (s) et à une ressource matérielle non partageable (9).

2. Dispositif selon la revendication 1, caractérisé en ce que lesdits moyens de contrôle comprennent un multiplexeur (4), dont une première entrée (E2) est reliée à la sortie de données du registre (5) et dont l'autre entrée (E1) est reliée au premier bus (2), la sortie du multiplexeur étant reliée à l'entrée du registre, et une porte ET (6) dont une entrée est reliée à au moins un fils (MSB) de bit de contrôle du bus (2) et dont une autre entrée est reliée à la sortie du champ de contrôle (MSB) du registre (5), la sortie de la porte ET (6) étant reliée à l'entrée de commande du multiplexeur (SELCT).

3. Dispositif selon la revendication 1, caractérisé en ce que lesdits moyens de contrôle (6') comprennent un circuit de portes relié à au moins un fil (MSB) de bit de contrôle du premier bus (2) et à la sortie du champ de contrôle (MSB) du registre (5) pour commander la propagation d'impulsions d'horloge (8) vers le registre (5) et en ce que l'entrée du registre est reliée au premier bus (2).

4. Dispositif selon l'une des revendications précédentes, caractérisé en ce que le champ de données comporte au moins l'une des données suivantes :
numéro de la tâche accédant à la ressource, numéro du processeur correspondant, identificateur de tâche unique parmi toutes les tâches susceptibles de vouloir accéder au même instant à la ressource, délai prévisionnel restant à courir pour l'occupation de la ressource.

## Patentansprüche

1. Vorrichtung mit einem Semaphorregister für Multiprozessorsysteme, dadurch gekennzeichnet, daß sie ein Register (5) mit mindestens einem Kontrollfeld (MSB) und einem Datenfeld sowie Mittel (4, 6, 6') zur Kontrolle des Beschreibens dieses Registers (5) mit Daten, die auf einer ersten Busleitung (2) geliefert werden, an die die verschiedenen Prozessoren des Systems angeschlossen sind, wobei diese Mittel an mindestens einen Draht (MSB) für das Kontrollbit dieser Busleitung (2) und an den Ausgang des Kontrollfelds (MSB) des Registers angeschlossen sind, während im übrigen der Datenausgang des Registers an mindestens eine Register-Lesebusleitung (3) über den Prozessor oder die Prozessoren angeschlossen ist und an eine Hardware-Ressource (9), die nicht gleichzeitig von mehreren Organen ansprechbar ist.

2. Vorrichtung nach Anspruch 1, dadurch gekennzeichnet, daß die Kontrollmittel einen Multiplexer (4) enthalten, dessen erster Eingang (E2) an den Datenausgang des Registers (5) und dessen zweiter Eingang (E1) an die erste Busleitung (2) angeschlossen ist, während der Ausgang des Multiplexers mit einem Eingang des Registers verbunden ist, und daß ein Und-Tor (6) vorgesehen ist, von dem ein Eingang an mindestens einen Draht (MSB) für das Kontrollbit der Busleitung (2) angeschlossen ist, während ein anderer Eingang an den Ausgang des Kontrollfelds (MSB) des Registers (5) angeschlossen ist und der Ausgang des Und-Tors (6) mit dem Steuereingang (SELCT) verbunden ist.

3. Vorrichtung nach Anspruch 1, dadurch gekennzeichnet, daß die Kontrollmittel (6') eine logische Schaltung enthalten, die an mindestens einen Draht (MSB) für das Kontrollbit der ersten Busleitung (2) und an den Ausgang des Kontrollfelds (MSB) des Registers (5) angeschlossen ist, um die Weiterleitung von Taktimpulsen (8) zum Register (5) zu steuern, und daß der Eingang des Registers an die erste Busleitung (2) angeschlossen ist.

4. Vorrichtung nach einem der vorstehenden Ansprüche, dadurch gekennzeichnet, daß das Datenfeld mindestens eine der folgenden Angaben enthält: die Nummer der Aufgabe, die zur Ressource Zugang hat, die Nummer des entsprechenden Prozessors, die Identifizierung der einzigen Aufgabe unter allen möglichen Aufgaben, die in einem gleichen Augenblick Zugang zur Ressource suchen, und die voraussichtlich verbleibende Zeitdauer für die Belegung der Ressource.

## Claims

1. Semaphore register device for multi-processor systems, characterised in that it features a register (5) having at least one control field (MSB) and one data field, and means (4, 6; 6') to control the writing, into said register (5), of data information sent on a first bus (2) to which the various processors of the system are connected, said means being connected to at least one control bit wire (MSB) of said bus (2) and to the output of the control field (MSB) of the register, the data output of the register being further connected to at least one bus (3) for the re-reading of the register by the processor or processors and to a non-shareable hardware resource (9).

2. Device according to claim 1, characterised in that said control means comprise a multiplexer (4), a first input (E2) of which is connected to the data output of the register (5) and the other input (E1) of which is connected to the first bus (2), the output of the multiplexer being connected to the input of the register, and an AND gate (6), one input of which is connected to at least one control bit wire (MSB) of the bus (2) and another input of which is connected to the output of the control field (MSB) of the register (5), the output of the AND gate (6) being connected to the control input of the multiplexer (SELCT).

3. Device according to claim 1, characterised in that said control means (6') comprise a gate circuit connected to at least one control bit wire (MSB) of the first bus (2) and to the output of the control field (MSB) of the register (5) in order to control the propagation of clock pulses (8) to the register (5), and in that the register input is connected to the first bus (2).

4. Device according to any of the preceding claims, characterised in that the data field features at least one of the following data elements:
number of the task accessing the resource; number of the corresponding processor; task identifier that is unique among all the tasks likely to seek access to the resource at the same point in time; scheduled period still to elapse for the occupancy of the resource.
